# EUROPEAN PATENT SPECIFICATION

(11) **EP 0 392 627 B1**
(45) Date of publication and mention of the grant of the patent: **04.08.1993**
(21) Application number: 90200867.1
(22) Date of filing: 10.04.1990
(51) Int. Cl.: A01F 15/14, A01F 15/08

(54) **Apparatus for and method of density control in rectangular balers to improve the bale tying operation**
Vorrichtung und Verfahren zur Regelung der Ballendichte in Pressen, um das Binden zu verbessern
Appareil et méthode de commande de la densité dans des presses rectangulaires pour améliorer le liage

(30) Priority: 14.04.1989 US 338170; 14.04.1989 US 338175
(43) Date of publication of application: 17.10.1990
(73) Proprietor: NEW HOLLAND BELGIUM N.V., B-8210 Zedelgem (BE)
(72) Inventor: Naaktgeboren, Adrianus, B-8211 Zedelgem (BE); Lippens, Christiaan A.C., B-9980 Sint-Laureins (BE); Schoonheere, Marnix J., B-8270 Ichtegem (BE)
(74) Representative: Vandenbroucke, Alberic

(56) References cited:
- EP-A- 0 223 351
- DE-A- 3 722 741
- US-A- 3 851 575
- US-A- 3 895 571

## Description

The present invention relates to rectangular balers for picking up a crop material from a field, compacting it into rectangular bales, and tying the bales with twine. The invention comprises an improvement in rectangular balers of the type disclosed in EP-A-223.351 and EP-A-294.075, the disclosures of which are incorporated herein by reference.

In conventional rectangular balers, crop material is picked up from the ground by a pick-up unit and fed into an elongated bale case or chamber. The crop material is fed into the bale case in timed sequence with a reciprocating plunger. The plunger compresses the crop material, gradually forming a bale and advancing it toward an exit opening in the bale case. When the bale being formed reaches a desired length, a tying mechanism is actuated to wrap at least one loop of binding material around the bale, tie a knot in the binding material, and cut the tied loop from the supply of binding material. This tying operation leaves an end portion of the binding material from the supply so that it extends across the bale case. After the tying operation, the formation of a new bale begins and as the new bale is formed, it forces the tied bale and a portion of the binding material toward the exit opening in the bale case, the binding material sliding between the tied bale and the new bale being formed as both are forced to move toward the exit opening.

As disclosed in EP-A-223.351, a baler of the type described above may have its operations automatically controlled by a microprocessor. In addition, an operator may input information into a control panel so that the baler automatically forms bales compacted to a desired density.

When baling damp silage crop at a desired density, the tying process may intermittently fail. Failure occurs either because of breakage of the binding material or because the binding material is pulled from the tying mechanism. Both types of failure usually occur within a few plunger strokes after a cycle of the tying mechanism. It is during this interval that the binding material encounters the greatest resistance to sliding between the tied bale and the new bale being formed as both are pushed toward the exit opening in the bale case.

Accordingly, it is the objective of the present invention to provide a novel apparatus for and a novel method of reducing the frequency of failure of the bale tying process in a rectangular baler. It has been found that failures of the tying mechanism can be substantially reduced by operating the density control mechanism of the baler so that, for an interval of time immediately after each bale is tied, the incoming crop material is compacted to a density which is lower than the desired bale density.

According to one aspect of the present invention, a rectangular baler is provided which comprises :
- a bale case having at least one wall portion which is movable generally laterally thereof to vary the cross-sectional area of said bale case;
- a cyclically operable compacting means for compacting crop material in the bale case and pushing said compacted crop material toward an exit opening therein;
- a bale density control mechanism including positioning means operatively associated with said at least one wall portion and control means operable to control the positioning means to move the at least one wall portion to thereby vary said bale case cross-sectional area in a manner to control the density of the crop material compacted by the compacting means in the bale case; and
- a cyclically operable bale tying mechanism for tying a binding material around successive increments of compacted crop material in the bale case to form bales, and

which is characterized in that :
the control means control the positioning means in a manner so that, for an interval of time immediately following each cycle of the tying mechanism, crop material entering the bale case is compacted to a first density and subsequently, until the succeeding cycle of the tying mechanism is initiated, said crop material entering the bale case is compacted to a second density greater than the first density.

According to another aspect of the present invention a method is provided for reducing the frequency of failure of the tying mechanism in a rectangular baler comprising :
- cyclically operable compacting means for compacting crop material in a bale case and pushing said compacted crop material toward an exit opening therein;
- control means for controlling the density to which the crop material is compacted in the bale case; and
- cyclically operable tying means for carrying out a tying process wherein loops of binding material are tied around successive lengths of said compacted crop material for separating said lengths of crop material into bales; said tying means, at the end of each tying cycle, holding portions of binding material across the bale case in the path of compacted crop material through said bale case in a manner so that these portions of binding material become part of the next loops to be formed;

said method being characterized in the steps of:
- operating the control means so that crop material entering the bale case is compacted to a first density for an interval of time immediately following each cycle of the tying means, and
- operating the control means so that crop material subsequently entering the bale case is compacted to a second density greater than the first density until the succeeding cycle of the tying means is initiated.

In one embodiment of the invention the density control mechanism is operated so that, for the first few strokes of the plunger after each bale is tied, the incoming crop material is compacted to said first, lower density.

This embodiment and the method of operating this embodiment substantially reduce the number of failures of the tying process. However, when working a very light windrow, or when a cycle of the tying mechanism takes place near the end of a windrow as the baler enters the headlands, failure of the tying process may still occur. The reason is that during several plunger strokes following a cycle of the tying mechanism, little crop material enters the bale case under these circumstances. Thus, after these several plunger strokes, when the density control returns to the higher (normal) density, conditions in the baler are almost the same as immediately after a cycle of the tying mechanism. When crop material is then compacted at the higher density, the binding material may still break.

This is overcome with an alternative embodiment of the present invention wherein the density control mechanism is operated so that, during formation of a first part of predetermined length of each bale, the incoming crop material is compacted to said first, lower density.

According to a preferred embodiment of the invention, a microprocessor controlled rectangular baler is provided which includes a plunger reciprocating in a bale case to compact increments of crop material, and length sensing means for determining when a column of compacted crop material of a predetermined length has been formed; the microprocessor being responsive to the length sensing means for controlling the compaction of the crop material at a first, lower density when the length of said column of compacted crop material is less than the predetermined length and thereafter controlling compaction of the crop material at a second, higher density.

According to still another aspect, the invention also provides a rectangular baler having :
- a microprocessor based control system for controlling operation of the baler;
- bale length sensing means for producing a first signal indicating the start of formation of a bale of crop material and a second signal when the bale of crop material being formed reaches a predetermined length; and
- means connecting the sensing means to the microprocessor based control system; the control system being responsive to the second signal for controlling the baler to compact the crop material to a desired density and responsive to the first signal for controlling the baler to compact the crop material to another density which is less than the desired density.

The invention and its mode of operation will now be described in greater detail, by way of example, with reference to the accompanying drawings, in which :
Fig. 1 schematically illustrates a bale density control system and shows a side elevation, partly in section, of the bale case and plunger in a rectangular baler;
Figs. 2A and 2B are schematic views illustrating the problem solved by the present invention;
Fig. 3 illustrates a portion of a bale length sensing means having a sensor for sensing when formation of a new bale begins and when the bale being formed has reached a predetermined length;
Figs. 4 and 5 are flow diagrams illustrating routines suitable for use in a microprocessor controlled rectangular baler to control the baler in accordance with the present invention.

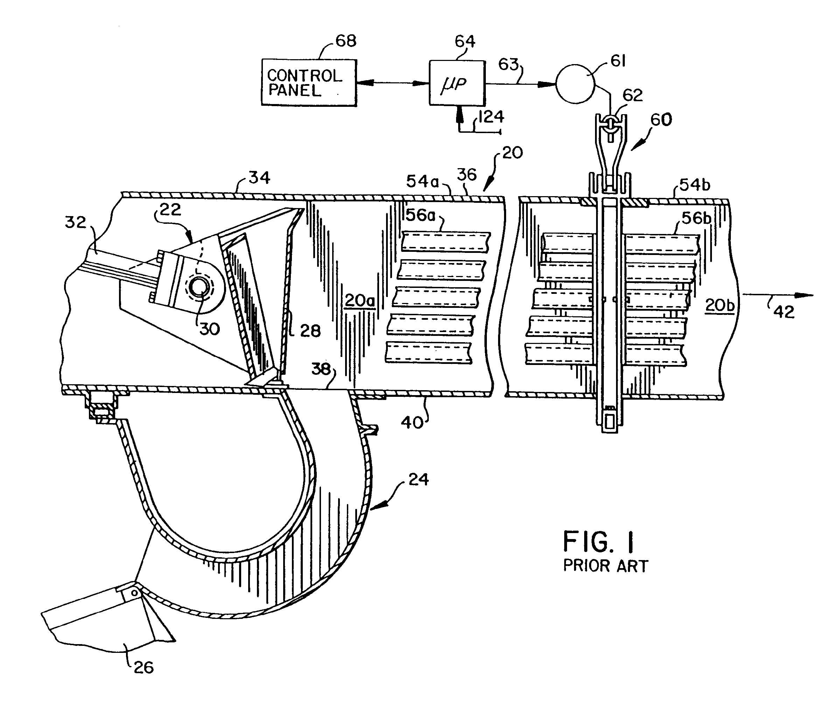

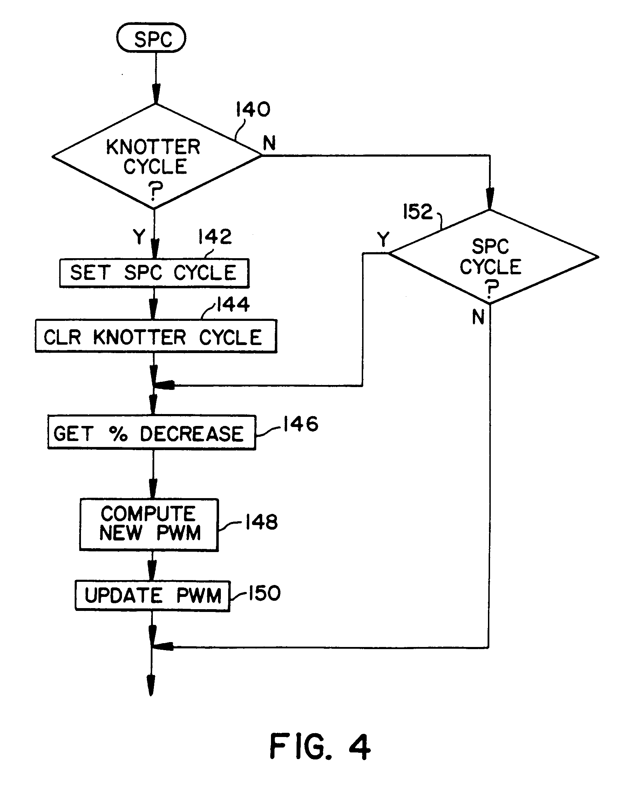

Fig. 1 illustrates a portion of a rectangular baler of known design, including a bale case 20, a plunger assembly 22, a feed chamber 24 and a pick-up mechanism 26. The plunger assembly 22 includes a plunger element 28 connected by wrist pins 30 to a pair of connecting rods 32. As the connecting rods 32 are driven by a drive source (not shown) the plunger 28 cyclically moves back and forth in a first portion 34 of the bale case. A second portion 36 of the bale case includes movable top rails 54a, 54b and side rails 56a, 56b. A tension adjusting mechanism 60 is provided for moving the rails 54a, 54b, 56a, and 56b to thereby vary the cross-sectional area of regions 20a and 20b of the bale case. The tension adjusting mechanism 60 includes a hydraulic cylinder unit 62 for moving the movable rails and a current controlled pressure valve 61 for controlling the hydraulic cylinder unit 62. A microprocessor based control circuit 64 controls the operation of the baler and provides a pulse width modulated signal over lead 63 to control valve 61. An operator's control and indicator panel 68 is provided so that an operator may manually key in control data and observe indications of operating conditions in various parts of the baler.

The system shown in Fig. 1 is fully described in EP-A-223.351. Briefly, an operator selects a desired density depending on the crop to be harvested, its moisture content, etc. The selected density value is keyed into the system at the control and indicator panel 68. The microprocessor 64 stores the desired density value and cyclically compares it with a value representing the actual density to which crop material entering the bale case 20 is being compacted. This value is derived by sensing the load placed on connecting rods 32 in driving crop material through bale case 20. From the value representing actual density and the input representing desired density, the microprocessor 64 derives a pulse width modulated signal to control the valve 61 thereby adjusting the positions of rails 54a, 54b, 56a, and 56b. This changes the cross-sectional areas of the regions 20a and 20b of the bale case 20, thereby changing the force which plunger 28 must exert on the crop material to force it through the bale case. Thus, the density to which crop material is compacted is controlled by microprocessor 64 as it controls the rails.

As the baler moves over the ground, crop material is picked up by pick-up mechanism 26 and fed through feed chamber 24 so that it enters the bale case through an opening 38 in the bottom wall 40 of the bale case. The plunger 28 cyclically moves back and forth in the bale case 20 and each time it moves to the right it compacts crop material which has entered the bale case through opening 38 against already-compacted crop material. As more crop material is compacted, it is forced in the direction of arrow 42 toward an exit opening (not shown) at the rear end of the bale case.

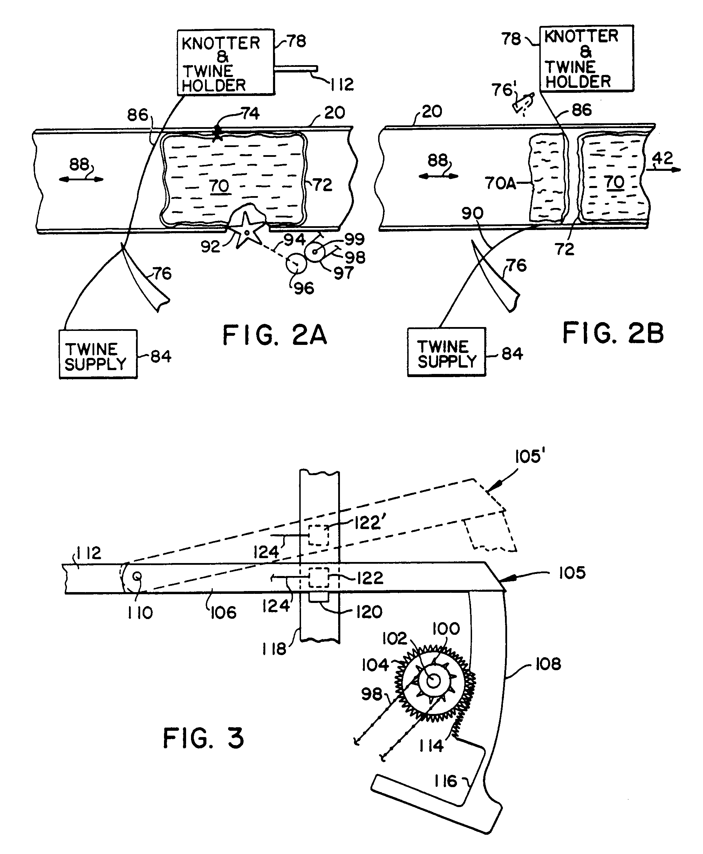

Before the crop material exits from bale case 20 it is, in effect, separated into bales by a bale tying mechanism of conventional design. The bale tying mechanism is not shown in Fig. 1 but its purpose is to wrap loops of a binding material such as twine or wire around successive lengths of crop material in the bale case, tie knots in the loops, and cut the tied loops from the binding material supply. Fig. 2A schematically illustrates a bale 70, located in bale case 20, and surrounded by a loop of binding material (twine) 72 in which a knot 74 has been tied. The loop 72 and knot 74 have been formed by a tying mechanism including a needle 76 located below the bale case and a knotter and holder, collectively designated 78, located above the bale case. The bale tying mechanism may, for example, be of the type described in EP-A-77.141 having a plurality of needles, knotters and holders arrayed transverse to the length of the bale case.

Fig. 2A shows the position of a twine at the end of a cycle of the tying mechanism. Twine from an twine supply 84 extends through the end of needle 76 and an end portion 86 of the twine extends through the bale case and is held by the holder 78. The end portion 86 has been severed from the knot 74. Referring now to Fig. 2B, as more crop material enters bale case 20 and is compacted by reciprocating the plunger 22 as indicated by arrow 88, the compacted crop material begins forming a new bale 70A. As bale 70A is formed, both it and bale 70 are pushed in the direction of arrow 42 toward the exit opening of the bale case. This movement of bale 70A draws twine from twine supply 84. At the same time, and because the upper end of the twine is held by twine holder 78, the twine slides upwardly between bale 70 and partially formed bale 70A if the crop material is not being compacted so tightly that it prevents the twine from sliding. If the sliding friction should be too great then the twine will not slide but will break or its end will pull loose from the twine holder 78 and the tying process will fail.

Assuming normal operation, after a desired length of crop material has been compacted into bale 70A, the tying mechanism is actuated. The needle 76 swings arcuately upwardly through the bale case and delivers a portion 90 of the twine to knotter and twine holder 78 as indicated at 76'. The needle 76 returns to its initial position while the knotter and twine holder 78 tie a knot with the twine portions 86 and 90, sever the twine at portion 90, and leave a new twine portion 86 held by holder 78.

As described above with respect to Fig. 2B, the twine portion 86 may break or pull free of twine holder 78 if the crop material in partially formed bale 70A is too densely compacted against bale 70. The failure usually occurs within three to five plunger strokes after the tying mechanism has completed its cycle of operation but may occur later when a light windrow is being worked or if the baler enters the headlands immediately after a cycle of the tying mechanism. It is believed that after a sufficient length of bale has been formed which usually is after a first few plunger cycles after the completion of a cycle of the tying mechanism, the twine forms a groove across the face of the compacted crop material 70A so that the sliding friction is reduced. Therefore, by compacting the crop material 70A at some density lower than the normal i.e. programmed, compaction density until after a sufficient length of crop material 70A has been compacted, the frequency of failure of the bale tying process may be reduced. When subsequently the controller 64 sets the density level back to the "normal" value, the density in the initial portion of the bale 70A is increased accordingly without however hampering the continued sliding movement of the twine through the groove during the remainder of the bale forming cycle.

The bale length may be measured by a bale length measuring apparatus similar to that disclosed in EP-A-77.141. In Fig. 2A, the bale length measuring apparatus includes a star-shaped metering wheel 92 mounted underneath bale case 20 but extending upwardly into the bale case through a slot. The metering wheel is fixedly mounted on a rotatable shaft 94 that extends transversely to the direction of bale movement. A gear 96 is mounted on shaft 94 at a point which is outboard of the bale case. Gear 96 meshes with another gear 97 mounted on a shaft 99. A sprocket (not shown) on shaft 99 drives a chain 98 which extends upwardly along one side of bale case 20 to a further sprocket 100 (Fig. 3) mounted on a shaft 102 which is supported above bale case 20 and extends transversely to the direction of bale movement.

Fixedly mounted on shaft 102 is a further gear 104 for driving a tying mechanism trip arm. The trip arm assembly 105 comprises a generally horizontally extending lever 106 attached to a curved segment 108 which extends downwardly. Lever 106 is attached by a pivot 110 to a further lever 112.

One edge 114 of curved segment 108 has teeth which mesh with the teeth of gear 104. In addition, curved segment 108 is provided with a recess 116. A fixed support 118 supports an adjustable stop schematically illustrated at 120. The stop limits the downward pivoting of lever 106 about pivot 110. A tension spring (not shown) acts through lever 112 and pivot 110 to bias lever 106 and segment 108 so that the toothed surface 114 of segment 108 engages gear 104.

Immediately after the bale tying mechanism has completed a cycle to tie a bale, the trip arm assembly 105 is in the position shown in Fig. 3. As more crop material enters the bale case 20 and formation of a new bale begins, the compacted crop material is forced to the right as viewed in Fig. 2A. The metering wheel 92 is engaged and driven by the compacted crop material to thereby drive the train including shaft 94, gears 96 and 97, shaft 99, the sprocket (not shown) on shaft 99, chain 98, sprocket 100, shaft 102 and gear 104. The gear 104 is rotated counter-clockwise as viewed in Fig. 3 so that, as it rotates, the teeth on this gear 104 drive the trip arm assembly 105 upwardly; this trip arm assembly 105 pivoting about pivot 110. When the gear 104 rides off the lower end of toothed portion 114, the tension of the previously mentioned spring (not shown) pulls lever 112 and trip arm assembly 105 to the left as viewed in Fig. 3. As disclosed in EP-A-77.141 the lever 112 actuates a single revolution clutch which couples drive power to the tying mechanism including twine needle 76 and the knotter 78. The tying mechansim then goes through a cycle to tie loops of twine around the compacted crop material. During this cycle, a cam (not shown) which is also driven by the clutch, applies a force to lever 112 to move this lever 112 and trip arm assembly 105 to the right as viewed in Fig. 3. This frees the recessed portion 116 of the trip arm assembly 105 from gear 104. The trip arm assembly falls downwardly, pivoting about pivot 110, until it again engages the stop 120.

A Hall-effect sensor or switch 122 is mounted on the support 118 and produces an electrical output signal on a lead 124. This lead 124 is connected to the microprocessor-based control system 64 (Fig. 1) to signal the control system that a cycle of the bale tying mechanism has been initiated and the trip arm assembly 105 has returned to its home position. A magnet (not shown) mounted on the trip arm assembly 105 actuates the switch 122 so that it produces a signal having a first level as long as the magnet is in proximity to the switch 122, and a second level when the magnet is displaced from the switch 122. With reference to Fig. 3, the switch 122 produces a signal having the first level from the time the trip arm assembly 105 drops to the position shown in solid outline and continues producing this first level signal until after a predetermined length of compacted material has moved past metering wheel 92 to thereby raise the trip arm assembly 105 to the position illustrated at 105'. When in position 122', this switch then produces an electrical output signal of a second level and continues to do so until after the next cycle of the bale tying mechanism 78 when the trip arm assembly 105 returns to the position shown in solid lines in Fig. 3. The first level output signal from sensor 122 sets a KNOTTER CYCLE flag at a first memory location in the microprocessor-based control system 64 and the second level output signal from sensor 122' clears an SPC CYCLE flag at a second memory location.

As previously described, an operator may key into control panel 68 a value representing the density to which it is desired to normally compact the crop material. The microprocessor-based control system 64 senses the conditions in the baler and from these conditions sensed and the density value keyed into the control panel 68, the system computes a value which is stored at a memory location designated PWM. A new value of PWM is computed for each stroke of plunger 28. Each PWM value computed controls the duration of the signal applied to valve 61 to adjust the rails of the bale case 20 and thereby cause the crop material to be compacted to the density initially entered at the control panel 68.

In accordance with the present invention, the operator's control and indicator panel of the system disclosed in EP-A-223.351 is modified to accept a further input parameter which represents the percentage by which the operator wishes to decrease the normal desired density during the early part of the formation of each bale. The percentage value is selected by the operator depending upon such conditions as the type of crop being harvested and its moisture content. The percentage value entered at the control panel 68 is stored by the microprocessor 64 in a memory location designated % DECREASE.

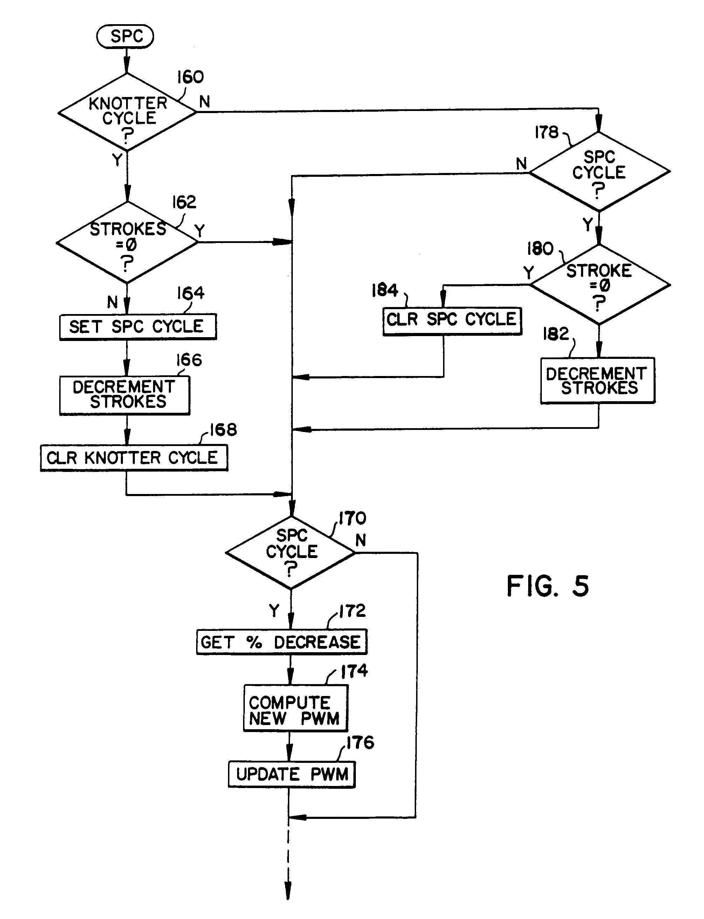

It is also necessary to modify the program controlling the microprocessor based control system of EP-A-223.351 by adding an SPC Silage Pressure control routine as shown in Fig. 4. This routine may be inserted in the LOOP routine described in said patent, preferably at a point after the value PWM is computed and stored.

Each stroke of plunger 28 initiates execution of the LOOP routine as described in EP-A-223.351 and during each execution of the LOOP routine the SPC routine shown in Fig. 4 is executed. The SPC routine begins at step 140 by testing the KNOTTER CYCLE flag. This flag is an indicator bit stored in a specific memory location each time the sensor 122 sends a first level signal to the microprocessor-based control system 64 indicating that the bale tying mechanism has just cycled.

Assuming that the bale tying mechanism has just cycled, the test at step 140 proves true and the program proceeds to step 142 where it sets an SPC CYCLE flag. This flag is an indicator bit stored in a specific location. It is set at step 142 during the first execution of the SPC routine following a cycle of the bale tying mechanism 78. It is reset when the sensor 122 sends a second level signal to the microprocessor-based control system 64 indicating that some predertermined incremental first part of a bale has been formed. Therefore, anytime the SPC routine is executed and the SPC cycle flag is set, it means that the desired density control value PWM should be recomputed.

At step 144 the program clears the KNOTTER CYCLE flag. At step 146 it reads % DECREASE from memory and at step 148 it multiplies PWM by % DECREASE to obtain a value which is then stored at location PWM by step 150. Thus, the value of PWM computed prior to execution of the SPC routine, and representing the desired density as entered at the control panel 68 by the operator, is replaced with a smaller value PWM. When this smaller value is subsequently converted to a pulse width modulated signal for controlling valve 61, the rails of the bale case 20 are adjusted so that the crop material is compacted to a lower density.

On the second execution of the SPC routine, the test at step 140 proves false and the program branches to step 152 where the SPC CYCLE flag is tested. Since it was set at step 142 during the first execution of the SPC routine, the test proves true and the program branches to step 146. Steps 146, 148 and 150 are then executed as previously described so that a modified PWM value is computed and used to control the density.

The next time the SPC routine is executed the routine advances through steps 140, 152, 146, 148 and 150 as described above. This sequence is repeated for each stroke of plunger 28 until such time as the length of crop material compacted is sufficient to cause trip arm assembly 105 to be raised so that the sensor 122 produces an output signal having a second level which clears the SPC CYCLE FLAG. Then, on the next execution of the SPC routine the program proceeds from step 140 to step 152. At step 152 the test now proves false so the program bypasses steps 146, 148 and 150. Therefore, once sensor 122 produces the second level output signal, the value of PWM computed from the desired density value keyed into control panel 68 by the operator is used to derive the pulse width modulated signal for controlling valve 61.

After the SPC CYCLE flag is cleared, each plunger stroke causes another execution of the SPC routine during which only steps 140 and 152 are executed. This continues until, after a full bale has been compacted and a cycle of the tying mechanism has taken place, the trip arm assembly 105 returns to the position shown in Fig. 3 and the sensor 122 produces the first level output signal.

While a preferred embodiment of the invention has been described in specific detail, it will be understood that various modifictions and substitutions may be made in the described embodiment without departing from the spirit and scope of the invention. For example, it is not necessary to provide for entering the value % DECREASE at the operator panel. The microprocessor may be programmed to use an internally stored percentage value although such an arrangement would not permit variations based on crop moisture or the type of crop being harvested. Other modifications will be readily apparent to persons of ordinary skill in the art.

Another such modified embodiment of the present invention now will be described with reference to Figure 5. This embodiment equally starts from the system disclosed in EP-A-223.351 but this time, the operator control and indicator panel is modified to provide for operator input of two additional input parameters. By operation of the modified panel, the operator may enter the percentage by which the normal density is to be reduced after each cycle of the tying mechanism, and the number of plunger strokes the reduced density is to be effective. These values are stored in a memory at loctions designated STROKES TOT and % DECREASE. The program of the microprocessor 64 is also modified to include an SPC subroutine such as that illustrated in Fig. 5. This subroutine may be included in the LOOP routine described in EP-A-223.351 and is preferably located at a point in the routine subsequent to the calculation of the PWM value which is used to derive the pulse width modulated signal for controlling valve 61.

In Fig. 5, the SPC routine begins at step 160 where it checks to see if an SPC knotter cycle start flag has been set. The SPC knotter cycle start flag is set at the same time as a flag latch 206A described in EP-A-223.351 and indicates that a knotter cycle has taken place. If the test at step 160 indicates that a knotter cycle has taken place, the routine proceeds to step 162 where the value STROKES TOT is copied into a temporary location designated STROKES. STROKES is then tested to see if it has a zero value. If it does not, the routine proceeds to step 164 where it sets an SPC CYCLE flag. The value in STROKES is decremented at step 166 and the KNOTTER CYCLE FLAG is cleared at step 168 before the program proceeds to step 170.

At step 170 the SPC CYCLE flag is tested. Since the flag was set at step 164, the test proves true and the program moves to step 172. Step 172 reads the value % DECREASE from memory. Step 174 multiplies this value by the PWM value which was calculated prior to the start of the SPC routine and stored at location PWM. The product is then subtracted from the value in PWM. At step 176 the value in PWM is updated by replacing it with the resulting value computed at step 174. Subsequently, and as explained more fully in EP-A-223.351, the new value in PWM is processed to develop a pulse width modulated signal which is applied to valve 61 to thereby adjust rails 54a, 54b, 56a and 56b, which, in turn, reduce the density of compaction of the crop material.

On the next plunger stroke, when the LOOP routine is executed and reaches step 160 of the SPC routine, the test will indicate that no new knotter cycle has started. The program branches to step 178 where the SPC CYCLE flag is tested. Since the SPC CYCLE flag was set at step 164, the program moves to step 180, where to value STROKES is tested. If the value of STROKES is not equal to zero, it is decremented at step 182, The program then proceeds through steps 170, 172, 174 and 176 as previously described.

Each subsequent plunger stroke causes another execution of the LOOP routine as described in EP-A-223.351. During each execution, the program moves through steps 160, 178, 180, 182 etc. as described above. This continues until the value STROKES is decremented (at step 182) to zero. On the next execution of LOOP, the program again executes steps 160, 178 and 180, but at step 180, the test proves true. The program branches to step 184 where the SPC CYCLE flag is cleared. The program tests the SPC CYCLE flag at step 170 and since the flag has been reset, the program branches around steps 172, 174 and 176. Thus, the PWM, value calculated prior to each execution of the SPC cycle remains in location PWM and is used to generate the pulse width modulated signal which is applied to valve 61 to control the density to which the crop material is compacted.

Once the SPC cycle flag is cleared, the normal (higher) density value entered through the operator's panel and stored in memory, is used to generate the pulse width modulated signal applied to valve 61. The SPC routine does not modify the value calculated from the density value and stored at location PWM. Each execution of LOOP causes the SPC routine to be executed but the routine finds, at step 160, that the knotter has not initiated a new cycle, and at steps 178 and 170 that the SPC CYCLE flag is not set. Thus, the SPC routine does not change the value in location PWM. The execution of steps 160, 178 and 170 is repeated for each plunger stroke until another knotter cycle is initiated to set the KNOTTER CYCLE START flag.

From the foregoing description it is seen that the present invention provides novel apparatuses for and methods of reducing the frequency of failure of the tying process in a rectangular baler. While specific apparatuses have been described for carrying out the methods disclosed herein, it will be understood that other apparatuses may be employed. For example, the values STROKES TOT and/or % DECREASE may be permanently stored in a memory in controller 64.

## Claims

1. A rectangular baler comprising :
- a bale case (20) having at least one wall portion (54a, b / 56a, b) which is movable generally laterally thereof to vary the cross-sectional area of said bale case (20);
- a cyclically operable compacting means (22) for compacting crop material in the bale case (20) and pushing said compacted crop material toward an exit opening therein;
- a bale density control mechanism (60, 64) including positioning means (62) operatively associated with said at least one wall portion (54a, b / 56a, b) and control means (64) operable to control the positioning means (62) to move the at least one wall portion (54a, b / 56a, b) to thereby vary said bale case cross-sectional area in a manner to control the density of the crop material compacted by the compacting means (22) in the bale case (20); and
- a cyclically operable bale tying mechanism (76, 78) for tying a binding material (72) around successive increments of compacted crop material in the bale case (20) to form bales, and
characterized in that :
the control means (64) control the positioning means (62) in a manner so that, for an interval of time immediately following each cycle of the tying mechanism (76, 78), crop material entering the bale case (20) is compacted to a first density and subsequently, until the succeeding cycle of the tying mechanism is initiated, said crop material entering the bale case (20) is compacted to a second density greater than the first density.

2. A baler according to claim 1 characterized in that crop material is compacted in the bale case (20) to th first density for a predetermined number of cycles of the compacting means (22) immediately following each cycle of the tying mechanism (76, 78).

3. A baler according to claim 1 characterized in that crop material is compacted in the bale case (20) to the first density during the formation of a first part of predetermined length of each bale.

4. A baler according to claim 1 characterized in that the control means comprise a microprocessor (64) which is responsive to a density value entered therein through an operator panel (68) for controlling the compaction of crop material to the second density during said subsequent interval of time.

5. A baler according to claim 4 characterized in that the microprocessor (64) is programmed to use an internally stored percentage value for computing the first density value by multiplying this percentage value with the second density value.

6. A baler according to claim 1 characterized in that the control means comprise a microprocessor (64) which is responsive to first and further density values entered therein through an operator panel (68) for determing the first and second densities to which the crop material is to be compacted.

7. A baler according to any of the claims 4 to 6 characterized in that the microprocessor (64) is programmed to use an internally stored value determining the length of the first interval of time.

8. A baler according to claim 7 characterized in that the internally stored value determining the length of the first interval of time is a predetermined number of strokes of the compacting means (22).

9. A baler according to any of the claims 4 to 6, characterized in that the microprocessor (64) is responsive to a further value entered therein through the operator panel (68) for determining the length of the first interval of time.

10. A baler according to claim 5 or 6, characterized in that :
- length measuring means (92-126) are provided which are operable to produce a first signal each time a cycle of operation of the bale tying mechanism (76, 78) takes place and a second signal each time the compacting means (22) complete a column of crop material of predetermined length in the bale case (20) after each said cycle of the bale tying mechansim (76, 78); and
- the microprocessor (64) is responsive to each first signal for controlling the compacting of the crop material to the first density during the interval between each said first signal and each subsequent second signal and to each second signal for controlling the compacing of the crop material to the second density during the interval between each said second signal and the next occurring first signal.

11. A baler according to claim 10 characterized in that the bale length measuring means (92-126) produce said first signal until said column of crop material of predetermined length is completed in the bale case (20) whereafter said bale length measuring means (92-126) produce said second signal until the occurrance of the next cycle of the tying mechanism (76, 78).

12. A baler according to claim 10 or 11 characterized in that the bale length measuring means (92-126) include a trip mechanism (105) for initiating a cycle of the bale tying mechanism (76, 78) and metering means (92-100) driven by compacted crop material for moving said trip mechanism (105).

13. A baler according to claim 12 characterized in that sensor means (122) are provided for sensing positions of a trip arm (106) of the trip mechanism (105) and producing said first and second signals in response to the sensing of said positions.

14. A method for reducing the frequency of failure of the tying process in a rectangular baler comprising :
- cyclically operable compacting means (22) for compacting crop material in a bale case (20) and pushing said compacted crop material toward an exit opening therein;
- control means (54a, b / 56a, b; 60, 64) for controlling the density to which the crop material is compacted in the bale case (20); and
- cyclically operable tying means (76, 78) for carrying out a tying process wherein loops of binding material (72) are tied around successive lengths of said compacted crop material for separating said lengths of crop material into bales; said tying means (76, 78), at the end of each tying cycle, holding portions of binding material (86) across the bale case (20) in the path of compacted crop material through said bale case (20) in a manner so that these portions of binding material (86) become part of the next loops to be formed;
said method being characterized in the steps of:
- operating the control means (54a, b / 56a, b; 60, 64) so that crop material entering the bale case (20) is compacted to a first density for an interval of time immediately following each cycle of the tying means (76, 78), and
- operating the control means (54a, b / 56a, b; 60, 64) so that crop material subsequently entering the bale case (20) is compacted to a second density greater than the first density until the succeeding cycle of the tying means (76, 78) is initiated.

15. A method according to claim 14, characterized in that :
- crop material entering the bale case (20) is compacted to the first density for a predetermined number of cycles of the compacting means (22) immediately following each cycle of the tying means (76, 78), and
- crop material subsequently entering the bale case (20) is compacted to the second density until the next tying cycle is initiated.

16. A method according to claim 14, characterized in that :
- the interval of time during which the crop material is compacted to the first density lasts from the moment the tying mechanism (76, 78) cycles until a column of crop material of predetermined length is compacted in the bale case (20), and
- crop material entering the bale case (20) subsequently is compacted to the second density until the next tying cycle is initiated.

## Patentansprüche

1. Rechteckballenpresse mit:
- einer Ballenkammer 20, die zumindestens einen Wandabschnitt (54a, b / 56a, b) aufweist, der allgemein seitlich hiervon beweglich ist, um die Querschnittsfläche der Ballenkammer (20) zu ändern
- einer zyklisch betätigbaren Verdichtungseinrichtung (22) zum Verdichten von Erntematerial in der Ballenkammer und zum Drücken des verdichteten Erntematerials in Richtung auf eine Austrittsöffnung der Ballenkammer,
- einem Ballendichte-Steuermechanismus (60, 64) der betriebsmäßig mit dem zumindestens einen Wandabschnitt (54a, b / 56a, b) verbundene Einstelleinrichtungen (62) und Steuereinrichtungen (64) einschließt, die zur Steuerung der Einstelleinrichtungen (62) betätigbar sind, um den zumindestens einen Wandabschnitt (54a, b / 56a, b) zu bewegen, um auf diese Weise die Querschnittsfläche der Ballenkammer in einer derartigen Weise zu ändern, daß die Dichte des von den Verdichtungseinrichtungen (22) in der Ballenkammer (20) verdichteten Erntematerials gesteuert wird, und
- einem zyklisch betätigbaren Ballenbindemechanismus (76, 78) zum Binden eines Bindematerials (72) um aufeinanderfolgende Abschnitte des verdichteten Erntematerials in der Ballenkammer (20) zur Bildung von Ballen,
dadurch gekennzeichnet, daß:
- die Steuereinrichtungen (64) die Einstelleinrichtungen (62) in einer derartigen Weise steuern, daß für ein Zeitintervall, das unmittelbar jedem Zyklus des Bindemechanismus (76, 78) folgt, in die Ballenkammer (20) eintretendes Erntematerial auf eine erste Dichte verdichtet wird und daß nachfolgend bis zur Einleitung des nächsten Zyklus des Bindemechanismus das in die Ballenkammer (20) eintretende Erntematerial auf eine zweite Dichte verdichtet wird, die größer als die erste Dichte ist.

2. Ballenpresse nach Anspruch 1, dadurch gekennzeichnet, daß das Erntematerial in der Ballenkammer (20) für eine vorgegebene Anzahl von Zyklen der Verdichtungseinrichtung (22), die unmittelbar jedem Zyklus des Bindemechanismus (76, 78) folgen, auf die erste Dichte verdichtet wird.

3. Ballenpresse nach Anspruch 1, dadurch gekennzeichnet, daß das Erntematerial in der Ballenkammer während der Formung eines ersten Teils mit vorgegebener Länge jedes Ballens auf die erste Dichte verdichtet wird.

4. Ballenpresse nach Anspruch 1, dadurch gekennzeichnet, daß die Steuereinrichtungen einen Mikroprozessor (64) umfassen, der auf einen in ihn über ein Bedienfeld (68) eingegebenen Dichtewert anspricht, um die Verdichtung des Erntematerials auf die zweite Dichte während des nachfolgenden Zeitintervalls zu steuern.

5. Ballenpresse nach Anspruch 4, dadurch gekennzeichnet, daß der Mikroprozessor (64) so programmiert ist, daß er einen intern gespeicherten Prozentwert zur Berechnung des ersten Dichtwertes durch Multiplikation dieses Prozentwertes mit dem zweiten Dichtewert verwendet.

6. Ballenpresse nach Anspruch 1, dadurch gekennzeichnet, daß die Steuereinrichtungen einen Mikroprozessor (64) umfassen, der auf über ein Bedienfeld (68) eingegebene erste und weitere Dichtewerte anspricht, um die ersten und zweiten Dichten zu bestimmen, auf die das Erntematerial zu verdichten ist.

7. Ballenpresse nach einem der Ansprüche 4 bis 6, dadurch gekennzeichnet, daß der Mikroprozessor (64) so programmiert ist, daß er einen intern gespeicherten Wert verwendet, der die Länge des ersten Zeitintervalls bestimmt.

8. Ballenpresse nach Anspruch 7, dadurch gekennzeichnet, daß der intern gespeicherte, die Länge des ersten Zeitintervalls bestimmende Wert eine vorgegebene Anzahl von Hüben der Verdichtungseinrichtung (22) ist.

9. Ballenpresse nach einem der Ansprüche 4-6, dadurch gekennzeichnet, daß der Mikroprozessor (64) auf einen weiteren über das Bedienfeld (68) in ihn eingegebenen Wert anspricht, um die Länge des ersten Zeitintervalls zu bestimmen.

10. Ballenpresse nach Anspruch 5 oder 6, dadurch gekennzeichnet, daß:
- Längenmeßeinrichtungen (92-126) vorgesehen sind, die zur Erzeugung eines ersten Signals jedesmal dann, wenn ein Betriebszyklus des Ballenbindemechanismus (76, 78) erfolgt, und eines zweiten Signals jedesmal dann betreibbar sind, wenn die Verdichtungseinrichtung (22) eine Erntematerialsäule mit vorgegebener Länge in der Ballenkammer (20) nach jedem Zyklus des Ballenbindemechanismus (76, 78) vervollständigt, und
- der Mikroprozessor (64) auf jedes erste Signal zur Steuerung der Verdichtung des Erntematerials auf die erste Dichte während des Intervalls zwischen jedem der ersten Signale und jedem nachfolgenden zweiten Signal, und auf jedes zweite Signal zur Steuerung der Verdichtung des Erntematerials auf die zweite Dichte während des Intervalls zwischen jedem zweiten Signal und dem als nächstes auftretenden ersten Signal anspricht.

11. Ballenpresse nach Anspruch 10, dadurch gekennzeichnet, daß die Ballenlängen-Meßeinrichtungen 92-126 das erste Signal erzeugen, bis die Erntematerialsäule mit vorgegebener Länge in der Ballenkammer (20) vervollständigt ist, worauf die Ballenlängen-Meßeinrichtungen (92-126) das zweite Signal erzeugen, bis der nächste Zyklus des Bindemechanismus (76, 78) auftritt.

12. Ballenpresse nach Anspruch 10 oder 11, dadurch gekennzeichnet, daß die Ballenlängen-Meßeinrichtungen (92-126) einen Auslösemechanismus (105) zur Einleitung eines Zyklus des Ballenbindemechanismus (76, 78) und Meßeinrichtungen (92-100) einschließen, die durch das verdichtete Erntematerial angetrieben werden, um den Auslösemechanismus (105) zu bewegen.

13. Ballenpresse nach Anspruch 12, dadurch gekennzeichnet, daß Meßfühlereinrichtungen (122) zur Messung von Positionen eines Auslösearmes (106) des Auslösemechanismus (105) und zur Erzeugung der ersten und zweiten Signale in Abhängigkeit von der Feststellung dieser Positionen vorgesehen sind.

14. Verfahren zur Verringerung der Fehlerhäufigkeit des Bindevorganges in einer Rechteckballenpresse, mit:
- zyklisch betreibbaren Verdichtungseinrichtungen (22) zur Verdichtung von Erntematerial in einer Ballenkammer und zum Schieben des verdichteten Erntematerials in Richtung auf eine Austrittsöffnung in der Ballenkammer,
- Steuereinrichtungen (54a, b / 56a, b; 60, 64) zur Steuerung der Dichte, auf die das Erntematerial in der Ballenkammer (20) verdichtet wird, und
- zyklisch betätigbare Bindeeinrichtungen (76, 78) zur Durchführung eines Bindevorganges, bei dem Schleifen aus Bindematerial (72) um aufeinanderfolgende Längenabschnitte des verdichteten Erntematerials gebunden werden, um diese Längenabschnitte des Erntematerials in Ballen zu unterteilen, wobei die Bindeeinrichtungen (76, 78) am Ende jedes Bindezyklus Abschnitte des Bindematerials (86) über die Ballenkammer (20) in die Bahn des verdichteten Erntematerials durch die Ballenkammer (20) in einer derartigen Weise halten, daß diese Abschnitte des Bindematerials (86) zu einem Teil der nächsten zu bildenden Schleifen werden, wobei das Verfahren durch die folgenden Schritte gekennzeichnet ist:
- Betätigen der Steuereinrichtungen (54a, b / 56a, b; 60, 64) derart, daß in die Ballenkammer (20) eintretendes Erntematerial für ein Zeitintervall, das unmittelbar auf jeden Zyklus der Bindeeinrichtungen (76, 78) folgt, auf eine erste Dichte verdichtet wird, und
- Betreiben der Steuereinrichtungen (54, a b / 56a, b; 60, 64) derart, daß nachfolgend in die Ballenkammer (20) eintretendes Erntematerial auf eine zweite Dichte, die größer als die erste Dichte ist, verdichtet wird, bis der nachfolgende Zyklus der Bindeeinrichtungen (76, 78) eingeleitet wird.

15. Verfahren nach Anspruch 14, dadurch gekennzeichnet, daß:
- in die Ballenkammer (20) eintretendes Erntematerial für eine vorgegebene Anzahl von Zyklen der Verdichtungeinrichtung (22), die unmittelbar auf jeden Zyklus der Bindeeinrichtungen (76, 78) folgen, auf eine erste Dichte verdichtet wird, und
- nachfolgend in die Ballenkammer (20) eintretendes Erntematerial auf die zweite Dichte verdichtet wird, bis der nächste Bindezyklus eingeleitet wird.

16. Verfahren nach Anspruch 14, dadurch gekennzeichnet, daß:
- das Zeitintervall, während dessen das Erntematerial auf die erste Dichte verdichtet wird, von dem Zeitpunkt, zu dem der Bindemechanismus (76, 78) einen Zyklus ausführt, bis zu dem Zeitpunkt dauert, zu dem eine Erntematerialsäule mit vorgegebener Länge in der Ballenkammer (20) verdichtet wurde, und
- in die Ballenkammer (20) eintretendes Erntematerial nachfolgend auf die zweite Dichte verdichtet wird, bis der nächste Bindezyklus eingeleitet wird.

## Revendications

1. Ramasseuse-presse à balles rectangulaires comportant :
- une cage à balle (20) pourvue d'au moins une partie formant paroi (54a, b / 56a, b) qui est mobile, d'une manière générale, latéralement par rapport à celle-ci pour faire varier la surface en section transversale de ladite cage à balle (20);
- des moyens de compactage (22) aptes à fonctionner d'une manière cyclique pour compacter des produits de récolte dans la cage à balle (20) et pour pousser lesdits produits de récolte compactés en direction d'un orifice de sortie prévu dans celle-ci;
- un mécanisme de contrôle de densité de balle (60, 64) comprenant des moyens de positionnement (62) associés d'une manière fonctionnelle à ladite partie formant paroi (54a, b / 56a, b) et des moyens de commande (64) aptes à agir pour commander les moyens de positionnement (62), afin de déplacer ladite partie formant paroi (54a, b / 56a, b), pour ainsi faire varier ladite surface en section transversale de la cage à balle de manière à contrôler la densité des produits de récolte compactés par les moyens de compactage (22) dans la cage à balle (20); et
- un mécanisme de liage de balle (76, 78) apte à fonctionner d'une manière cyclique pour lier un matériau d'attache (72) autour d'incréments successifs de produits de récolte compactés dans la cage à balle (20), afin de former des balles, et
caractérisée en ce que :
les moyens de commande (64) commandent les moyens de positionnement (62) de telle façon que, pendant un intervalle de temps suivant immédiatement chaque cycle du mécanisme de liage (76, 78), les produits de récolte qui pénètrent dans la cage à balle (20) sont compactés à une première densité et qu'ensuite, jusqu'à ce que le cycle suivant du mécanisme de liage soit amorcé, lesdits produits de récolte qui pénètrent dans la cage à balle (20) sont compactés à une seconde densité supérieure à la première densité.

2. Ramasseuse-presse selon la revendication 1, caractérisée en ce que les produits de récolte sont compactés dans la cage à balle (20) à la première densité pendant un nombre prédéterminé de cycles des moyens de compactage (22) suivant immédiatement chaque cycle du mécanisme de liage (76, 78).

3. Ramasseuse-presse selon la revendication 1, caractérisée en ce que les produits de récolte sont compactés dans la cage à balle (20) à la première densité pendant la formation d'une première partie de la longueur prédéterminée de chaque balle.

4. Ramasseuse-presse selon la revendication 1, caractérisée en ce que les moyens de commande comportent un microprocesseur (64) sensible à une valeur de densité introduite en lui par l'intermédiaire d'un panneau d'opérateur (68) pour commander le compactage des produits de récolte à la seconde densité pendant ledit intervalle de temps suivant.

5. Ramasseuse-presse selon la revendication 4, caractérisée en ce que le microprocesseur (64) est programmé pour utiliser une valeur de pourcentage stockée intérieurement en vue de calculer la première valeur de densité en multipliant cette valeur de pourcentage par la seconde valeur de densité.

6. Ramasseuse-presse selon la revendication 1, caractérisée en ce que les moyens de commande comportent un microprocesseur (64) sensible à des première et seconde valeurs de densité introduites en lui par l'intermédiaire d'un panneau d'opérateur (68) pour déterminer les première et seconde densités auxquelles les produits de récolte doivent être compactés.

7. Ramasseuse-presse selon l'une quelconque des revendications 4 à 6, caractérisée en ce que le microprocesseur (64) est programmé pour utiliser une valeur stockée intérieurement qui détermine la durée du premier intervalle de temps.

8. Ramasseuse-presse selon la revendication 7, caractérisée en ce que la valeur stockée intérieurement qui détermine la durée du premier intervalle de temps, représente un nombre prédéterminé de courses des moyens de compactage (22).

9. Ramasseuse-presse selon l'une quelconque des revendications 4 à 6, caractérisée en ce que le microprocesseur (64) est sensible à une seconde valeur introduite en lui par l'intermédiaire du panneau d'opérateur (68) pour déterminer la durée du premier intervalle de temps.

10. Ramasseuse-presse selon la revendication 5 ou 6, caractérisée en ce que :
- des moyens de mesure de longueur (92-126) sont prévus, moyens de mesure de longueur (92-126) qui sont aptes à fonctionner pour produire un premier signal à chaque fois qu'un cycle de fonctionnement du mécanisme de liage de balle (76, 78) a lieu, et un second signal à chaque fois que les moyens de compactage (22) achèvent une colonne de produits de récolte ayant une longueur prédéterminée dans la cage à balle (20) après chacun desdits cycles du mécanisme de liage de balle (76, 78); et
- le microprocesseur (64) est sensible à chaque premier signal pour commander le compactage des produits de récolte à la première densité pendant l'intervalle compris entre ledit premier signal respectif et chaque second signal suivant, et à chaque second signal pour commander le compactage des produits de récolte à la seconde densité pendant l'intervalle compris entre ledit second signal respectif et le premier signal apparaissant ensuite.

11. Ramasseuse-presse selon la revendication 10, caractérisée en ce que les moyens de mesure de longueur de balle (92-126) produisent ledit premier signal jusqu'à ce que ladite colonne de produits de récolte ayant une longueur prédéterminée soit achevée dans la cage à balle (20), après quoi, lesdits moyens de mesure de longueur de balle (96-126) produisent ledit second signal jusqu'à ce qu'ait lieu le cycle suivant du mécanisme de liage (76, 78).

12. Ramasseuse-presse selon la revendication 10 ou 11, caractérisée en ce que les moyens de mesure de longueur de balle (96-126) comportent un mécanisme de déclenchement (105) pour amorcer un cycle du mécanisme de liage de balle (76, 78) et des moyens de mesure (92-100) entraînés par les produits de récolte compactés pour déplacer ledit mécanisme de déclenchement (105).

13. Ramasseuse-presse selon la revendication 12, caractérisée en ce qu'il est prévu des moyens détecteurs (122) pour détecter des positions d'un bras de déclenchement (106) du mécanisme de déclenchement (105) et pour produire lesdits premier et second signaux en réponse à la détection desdites positions.

14. Méthode pour réduire la fréquence d'une défaillance du processus de liage dans une ramasseuse-presse à balles rectangulaires comportant :
- des moyens de compactage (22) aptes à fonctionner d'une manière cyclique pour compacter des produits de récolte dans une cage à balle (20) et pour pousser lesdits produits de récolte compactés en direction d'un orifice de sortie prévu dans celle-ci;
- des moyens de contrôle (54a, b / 56a, b; 60, 64) destinés à contrôler la densité à laquelle les produits de récolte sont compactés dans la cage à balle (20); et
- des moyens de liage (76, 78) aptes à fonctionner d'une manière cyclique pour effectuer un processus de liage dans lequel des boucles d'un matériau d'attache (72) sont liées autour de longueurs successives desdits produits de récolte compactés en vue de séparer lesdites longueurs de produits de récolte en balles; lesdits moyens de liage (76, 78) maintenant, à la fin de chaque cycle de liage, des portions de matériau d'attache (86) transversalement à la cage à balle (20) dans la trajectoire des produits de récolte compactés à travers ladite cage à balle (20), de telle façon que ces portions de matériau d'attache (86) deviennent des parties des boucles suivantes destinées à être formées;
ladite méthode étant caractérisée par les étapes qui consistent à :
- faire fonctionner les moyens de contrôle (54a, b / 56a, b; 60, 64) de telle façon que les produits de récolte qui pénètrent dans la cage à balle (20) sont compactés à une première densité pendant un intervalle de temps suivant immédiatement chaque cycle des moyens de liage (76, 78), et
- faire fonctionner les moyens de contrôle (54a, b / 56a, b; 60, 64) de telle façon que les produits de récolte qui pénètrent ensuite dans la cage à balle (20) sont compactés à une seconde densité supérieure à la première densité, jusqu'à ce que le cycle suivant des moyens de liage (76, 78) soit amorcé.

15. Méthode selon la revendication 14, caractérisée en ce que:
- les produits de récolte qui pénètrent dans la cage à balle (20) sont compactés à la première densité pendant un nombre prédéterminé de cycles des moyens de compactage (22) suivant immédiatement chaque cycle des moyens de liage (76, 78), et
- les produits de récolte qui pénètrent ensuite dans la cage à balle (20) sont compactés à la seconde densité jusqu'à ce que le cycle de liage suivant soit amorcé.

16. Méthode selon la revendication 14, caractérisée en ce que:
- l'intervalle de temps pendant lequel les produits de récolte sont compactés à la première densité dure depuis le moment où le mécanisme de liage (76, 78) effectue son cycle jusqu'à ce qu'une colonne de produits de récolte ayant une longueur prédéterminée soit compactée dans la cage à balle (20), et
- les produits de récolte qui pénètrent ensuite dans la cage à balle (20) sont compactés à la seconde densité jusqu'à ce que le cycle de liage suivant soit amorcé.
